# EUROPEAN PATENT SPECIFICATION

(11) **EP 0 458 761 B1**
(45) Date of publication and mention of the grant of the patent: **05.01.1994**
(21) Application number: 91830200.1
(22) Date of filing: 14.05.1991
(51) Int. Cl.: B60R 21/13

(54) **A tractor, particularly a garden tractor, with a safety arch which can be lowered**
Schlepper, insbesondere ein Gartenschlepper, mit einem abklappbaren Sicherheitsbügel
Tracteur, notamment un tracteur de jardin, avec un arceau de sécurité pivotant

(30) Priority: 22.05.1990 IT 6737290
(43) Date of publication of application: 27.11.1991
(73) Proprietor: SAME S.p.A., I-24047 Treviglio (Bergamo) (IT)
(72) Inventor: Filippini, Giuseppe, I-25081 Bedizzole (Brescia) (IT)
(74) Representative: Bosotti, Luciano

(56) References cited:
- EP-A- 0 051 100
- DE-A- 2 543 077
- FR-A- 531 461
- FR-A- 2 196 685
- GB-A- 2 175 259

## Description

The present invention relates in general to tractors and particularly to garden tractors with an open driving position, that is, one without a cab, having a safety arch which can be lowered and comprises a U-shaped tubular element whose arms are connected to two opposite side regions of the structure of the tractor for pivoting about a transverse axis between an erect position and a lowered position, as well as means for locating the safety arch in the preselected position and retaining means for preventing the displacement of the safety arch from the peselected position. A tractor of this type, corresponding to the preamble of claim 1, is known for example from EP-A-0 051 100.

The object of the present invention is to provide a tractor of the type defined above, in which the safety arch can be erected and lowered very easily without the need for tools or for the removal or fitting of any parts.

For this purpose, according to claim 1, the means for locating the safety arch comprise a rod slidable telescopically in each arm and having an engagement end which projects from the end of the arm under the action of resilient thrust means to engage a first or a second seat formed in the respective side region of the structure of the tractor when the arch is in one position or the other respectively, and the retaining means comprise a screw with an operating knob which is screwed into a diametral hole in each rod through an axial slot in the respective arm and is adapted, in its fully tightened condition, to be forced against the region of the internal wall of the arm which is opposite the axial slot.

According to a preferred aspect of the invention, each side region of the structure of the tractor has a box structure defined by a respective movable front panel which carries a light and is pivotable about a vertical hinge between a closed position in which the light faces forwards, and an open position in which the light faces sideways to enable the safety arch to be moved between its erect and lowered positions, quick-release retaining means being provided to hold the movable panel in the closed position.

Further characteristics and advantages of the invention will become clear from the detailed description which follows, with reference to the appended drawings, provided purely by way of non-limiting example, in which:
Figure 1 is a schematic side elevational view of a garden tractor according to the invention, with a safety arch shown in the erect position,
Figure 2 is a view similar to Figure 1 with the safety arch shown in the lowered position,
Figure 3 is a plan view taken on the arrow III of Figure 2,
Figure 4 is a perspective view of the detail indicated by the arrow IV of Figure 2, on an enlarged scale,
Figure 5 is a partial section of the detail indicated by the arrow V in Figure 4,
Figure 6 is a section taken on the line VI-VI of Figure 1 on an enlarged scale, and
Figure 7 is a section taken on the line VII-VII of Figure 6.

In the drawings, a garden tractor, schematically indicated 1, has an open driving position 2 and, in front of the latter, a safety arch 3 which can be lowered.

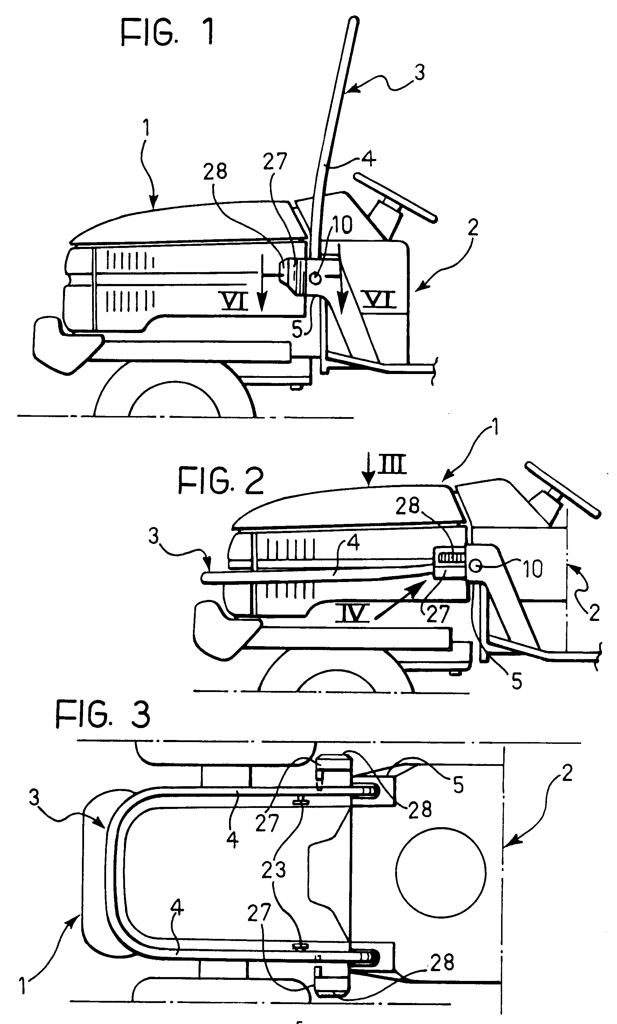

The arch 3 is movable between the erect position of use shown in Figure 1 and the lowered position shown in Figures 2 and 3, in which it extends forwards horizontally, outside the front part of the tractor 1.

The safety arch 3 is constituted by a U-shaped tubular element whose arms 4 are connected, in the manner explained below, to two opposite side regions of the structure of the tractor, generally indicated 5.

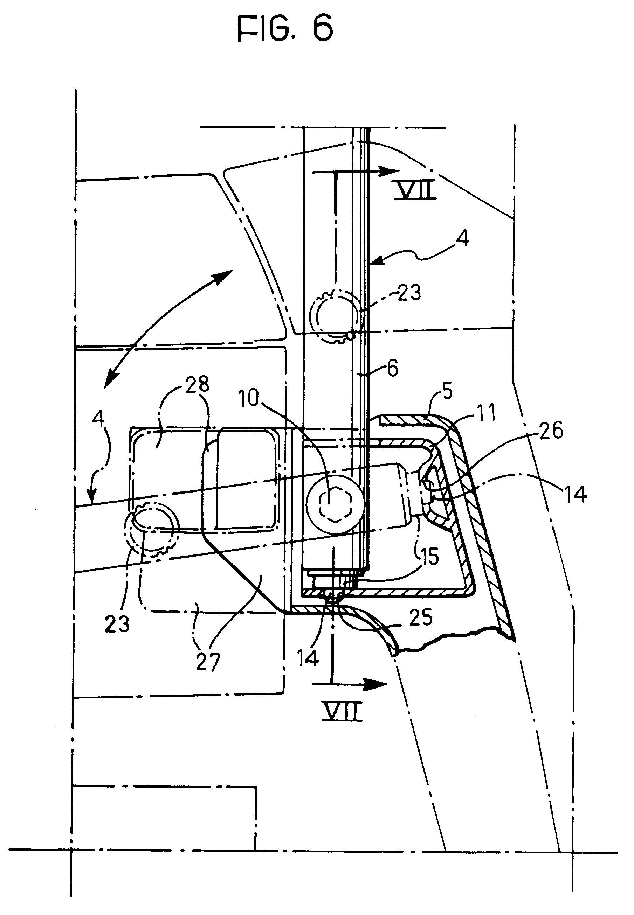

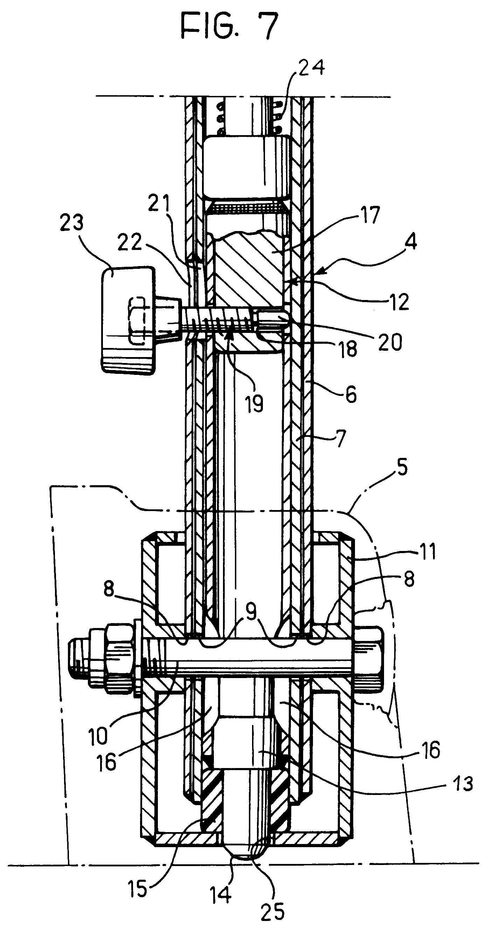

With reference in greater detail to Figures 6 and 7, each arm 4 comprises an outer tube 6 and an inner tube 7 which are fixed together and, near the free end of the arm 4, have respective pairs of aligned holes 8, 9 through which passes a transverse articulation pin 10 supported by a box structure 11 fixed to the corresponding side region 5.

A rod 12 is slidable telescopically in the inner tube 7 and, at its lower end has a shank 13 with a rounded end part 14 on which a stop member 15, for example of rubber, is fitted.

Above the shank 13, the rod 12 is tubular and is formed with two opposing axial slots 16 through which the articulation pin 10 passes.

A cylindrical body 17 is engaged in the top of the rod 12 and has a threaded through-hole 18 in which a screw 19 is engaged. The screw 19 has a reaction tip 20 at one end for cooperating with the inside wall of the inner tube 7 and at its opposite end passes through two axial slots 21, 22 formed in the inner tube 7 and the inner tube 6 respectively. A hand-operating knob 23 is fixed to the screw 19 and projects from the internal side of the arm 4.

A helical compression spring 24, which acts on the top of the cylindrical body 17 and reacts at its upper end against a bearing surface, not illustrated, inside the arm 4, tends to urge the rod 12 into the projecting position shown in Figures 6 and 7, in which the rounded end 14 and the stop member 15 project from the arm 4.

The box structure 11 is formed with two seats 25, 26 which are adapted to house the rounded end 14 when the safety arch 3 is in its erect position and in its lowered position respectively.

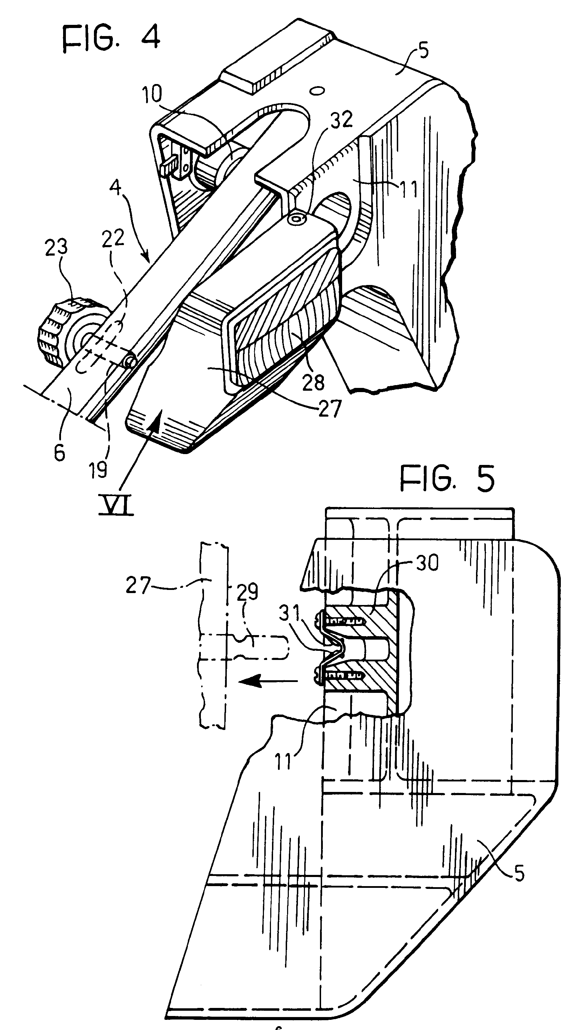

Each box structure 11 and the respective side region 5 in which the box structure 11 is enclosed are defined at the front by a movable panel 27 incorporating a light 28. The movable panel 27 is articulated to the respective side region 5 by a hinge 32 with a vertical axis and is thus pivotable between the closed position shown in Figures 1 and 6, in which the light 28 faces forwards, and the open position shown in Figures 2, 3 and 4, in which the light faces sideways, outwardly of the tractor 1. The movable panel 27 is retained in the closed position by means of a rear appendage 29 thereof which is releasably engageable in a fixed catch 30 set on the inside of the side region 5 and having a pair of engagement springs 31 (Figure 5) at its mouth.

When the safety arch 3 is in the erect position, the end 14 of each rod 12 is engaged in the corresponding seat 25 with its stop member 15 bearing on the base of the box structure 11. Each rod 12 is locked axially relative to the respective arm 4 by virtue of the tightening of the corresponding screw 19, as a result of which the thrust tip 20 clamps the body 17 to the wall of the inner tube 7. In this position, the panels 27 and their lights 28 are kept in the closed position, as a result of the engagement of their appendages 28 in the corresponding catches 30.

The safety arch thus safeguards the driver of the tractor 1 should the tractor turn over and can also be used for securing of any flexible hood (not shown) for protecting the driving position.

In order to pivot the safety arch 3 from its erect position to its lowered position, it is necessary first to move the panels 27 from their closed positions to their open positions. It then suffices to release the two screws 19 by means of the knobs 23 so as to enable the rods 12 to slide relative to the arms 4. At this point, the arch 3 is pushed forwards to release the ends 14 from the seats 25 against the action of the springs 24 and the arch 3 can then be moved to its lowered position. When the pivoting is complete, the ends 14 snap-engage in their seats 26, locating the arch 3 in its lowered position. In order to lock the arch 3 firmly in that position, it suffices to tighten the two screws 19 fully again by means of the respective knobs 23.

In order to return the safety arch 3 to its erect position, the steps described above are repeated in reverse.

Naturally, the details of construction and forms of embodiment may be varied widely with respect to those described and illustrated, without thereby departing from the scope of the present invention as defined in the claims.

Thus, for example, the movements of the safety arch 3 and of the movable panels 27 could be driven by means of hydraulic or electric servo-actuators operated sequentially or independently.

## Claims

1. A tractor, particularly a garden tractor, including a safety arch (3) which can be lowered and is formed by a U-shaped element whose arms (4) are connected to two opposite side regions (5) of the structure of the tractor (1) for pivoting about a transverse axis (10) between an erect position and a lowered position, locating means (14, 24) for locating the safety arch (3) in the preselected position, and retaining means (19) for preventing the displacement of the safety arch (3) from the preselected position, characterised in that the locating means comprise a rod (12) which is slidable telescopically in each arm (4) and has an engagement end (14) which projects from the free end of the arm (4) under the action of resilient thrust means (24) to engage a first or a second seat (25, 26) formed in the respective side region (5) of the structure of the tractor (1) when the arch (3) is in one position or other respectively, and in that the retaining means comprise a screw (19) with an operating knob (23) which is screwed into a diametral hole (18) in each rod (12) through an axial slot (21, 22) in the respective arm (4) and is adapted, in its fully tightened condition, to be forced against the region of the internal wall of the arm (4) which is opposite the axial slot (21, 22).

2. A tractor according to Claim 1, characterised in that each side region (5) of the structure of the tractor (1) has a box structure (11) defined by a respective movable front panel (27) which carries a light (28) and is articulated about a vertical hinge (32) for pivoting between a closed position in which the light (28) faces forwards, and an open position in which the light (28) faces sideways to enable the safety arch (3) to be moved between its erect and lowered positions, quick-release retaining means (29, 31) being provided for holding the lights (28) in the closed position.

3. A tractor according to Claim 2, characterised in that the retaining means comprise an engagement appendage (29) which projects from the rear of the light (28) and is engageable in a resilient catch member (31) fixed to the box structure (11).

## Patentansprüche

1. Traktor, insbesondere Gartentraktor mit einem absenkbaren Sicherheitsbügel (3), der durch ein U-förmiges Element gebildet ist, dessen Schenkel (4) mit zwei gegenüberliegenden Seitenbereichen (5) des Aufbaus des Traktors (1) verbunden und um eine Querachse (10) zwischen einer aufgerichteten Stellung und einer abgesenkten Stellung verschwenkbar sind, Feststelleinrichtungen (14,24) zum Feststellen des Sicherheitsbügels (3) in der zuvor gewählten Stellung und mit Halteeinrichtungen (19), die ein Verschieben des Sicherheitsbügels ( 3) aus der zuvor gewählten Stellung verhindern, **dadurch gekennzeichnet,** daß die Feststelleinrichtungen eine Stange (12) aufweisen, die teleskopartig in jedem der Schenkel (4) verschiebbar ist und ein Kupplungsende (14) aufweist, das unter der Wirkung elastischer Kupplungseinrichtungen (24) das freie Ende des Schenkels (4) überragt und in einen ersten bzw. einen zweiten im jeweiligen Seitenbereich (5) des Aufbaus des Traktors (1) ausgebildeten Sitz (25,26) einkuppelt, wenn sich der Bügel (3) in der einen bzw. der anderen Stellung befindet, und daß die Halteeinrichtungen eine Schraube (19) mit einem Betätigungsknopf (23) aufweisen, die durch einen axialen Schlitz (21,22) im jeweiligen Schenkel (4) jeweils in ein Loch (18) im Querschnitt der Stangen (12) eingeschraubt ist und im völlig angezogenen Zustand gegen den dem axialen Schlitz (21,22) gegenüberliegenden Bereich der Innenwand des Schenkels (4) drückbar ist.

2. Traktor nach Anspruch 1, **dadurch gekennzeichnet,** daß jeder Seitenbereich (5) des Aufbaus des Traktors (1) einen kastenartigen Aufbau (11) aufweist, der jeweils durch eine bewegliche, einen Strahler (28) tragende Frontplatte (27) bestimmt ist, die über ein vertikales Gelenk (32) zwischen einer geschlossenen Stellung, in der der Strahler (28) nach vorne gerichtet ist, und einer offenen Stellung, in der der Strahler (28) zur Seite gerichtet ist, um die Bewegung des Sicherheitsbügels (3) zwischen der aufgerichteten und der abgesenkten Stellung zu ermöglichen, schwenkbar ist, und daß schnell lösbare Halteeinrichtungen (29,31) vorgesehen sind, welche die Strahler (28) in der geschlossenen Stellung halten.

3. Traktor nach Anspruch 2, **dadurch gekennzeichnet,** daß die Halteeinrichtungen ein Kupplungs-Ansatzstück (29) aufweisen, das von der Rückseite des Strahlers (28) wegragt und in einen elastischen, am kastenartigen Aufbau (11) befestigten Halterungsteil (31) einkuppelbar ist.

## Revendications

1. Tracteur, notamment un tracteur de jardin, comprenant un arceau de sécurité (3) pouvant être abaissé, formé par un élément en forme d'un U, dont les bras (4) sont reliés à deux zones latérales opposées (5) de la structure du tracteur (1), de manière à pivoter, autour d'un axe transversal (10), entre une position debout et une position abaissée, des moyens de positionnement (14, 24) permettant de positionner l'arceau de sécurité (3) dans une position présélectionnée, et des moyens d'arrêt (19) permettant d'empêcher le déplacement de l'arceau de sécurité (3) hors de la position présélectionnée, caractérisé en ce que les moyens de positionnement comprennent une tige (12) qui est disposée de façon coulissante télescopique dans chaque bras(4) et qui a une extrémité d'engagement qui fait saillie depuis l'extrémité libre du bras (4) sous l'action d'un moyen élastique de rappel (24), de manière à entrer en engagement avec un premier et un second sièges (25, 26) formés dans la zone latérale correspondante (5) de la structure du tracteur (1), lorsque l'arceau (3) se trouve respectivement dans l'une ou dans l'autre des positions, et en ce que les moyens d'arrêt comprennent une vis (19) pourvue d'un volant de commande (23), qui est vissée dans un trou diamétral (18) ménagé dans chaque tige (12 ), à travers une fente axiale (21, 22) ménagée dans le bras correspondant (4), cette vis, lorsqu'elle se trouve en position de serrage complet, étant adaptée pour être forcée contre la zone de la paroi interne du bras (4), qui est opposée à la fente (21, 22).

2. Tracteur selon la revendication 1, caractérisé en ce que chaque zone latérale (5) de la structure du tracteur (1) comporte une structure de boîtier (11) définie par un panneau frontal mobile correspondant (27) qui porte une lampe (28) et est articulé autour d'une charnière verticale (32 ), de manière à pouvoir pivoter entre une position fermée, dans laquelle la lampe (28) est orientée face à l'extérieur, et une position ouverte, dans laquelle la lampe (28) est tournée vers le coté, de manière à permettre à l'arceau de sécurité (3) d'être déplacé entre ses positions debout et abaissée, des moyens d'arrêt à relâchement rapide (29, 31) étant prévus pour maintenir les lampes (28) dans leur position fermée.

3. Tracteur selon la revendication 2, caractérisé en ce que les moyens d'arrêt comprennent un appendice (29) faisant saillie depuis l'arrière de la lampe (28) et pouvant entrer en engagement avec un élément élastique à enclenchement (31) fixé sur la structure de boîtier (11).
